# EUROPÄISCHE PATENTANMELDUNG

(11) **EP 2 949 925 A1**
(43) Veröffentlichungstag der Anmeldung: **02.12.2015**
(21) Anmeldenummer: 14170685.3
(22) Anmeldetag: 30.05.2014
(51) Int. Cl.: F03D 9/00, F03D 1/04

(54) **Stromerzeugendes Aufwindkraftwerk**

(71) Anmelder: Seiwerath, Constant, 3249 Bettembourg (LU); Wiesen, Jörg, 66620 Nonnweiler/Otzenhausen (DE)
(72) Erfinder: Seiwerath, Constant, 3249 Bettembourg (LU); Wiesen, Jörg, 66620 Nonnweiler/Otzenhausen (DE)
(74) Vertreter: Lecomte & Partners

(57) **Zusammenfassung**

Die Erfindung betrifft ein Aufwindkraftwerk umfassend: eine sich um eine vertikale Achse kreisförmig erstreckende Außenwand (1); einen innerhalb der Außenwand angeordneten (1) und sich um die vertikale Achse drehenden Flügelring (7, 8); sowie mehrere beheizbare, sich durch die Außenwand (1) erstreckende und in einen stromaufwärts des Flügelrings (7, 8) liegenden ringförmigen Raum mündende Zuluft-Ansaugrohre (11). Das Aufwindkraftwerk umfasst zusätzlich stromabwärts des Flügelrings (7, 8) angeordnete Wärmetauscher (12), die zumindest einen Teil der Abwärme der Abluft zur Beheizung der Zuluft zurückgewinnen.

## Beschreibung

### Technisches Gebiet

Die Erfindung betrifft die Produktion von Energie, insbesondere von Strom über umweltschonende Maßnahmen.

### Stand der Technik

Die Patentanmeldung EP 1 741 927 A offenbart eine Aufwindkraftanlage, die zwei vertikale und konzentrische Ansaugrohre umfasst, die eine ringförmige Passage für Luft bilden. Eine Turbine am oberen Ende der Rohre wird durch die vertikale Strömung der Ansaugluft angetrieben. Die Turbine kann an einen Stromgenerator gekoppelt werden, um die erzeugte Energie in Strom umzuwandeln. Eine Reihe von Düsen werden am unteren Ende des Außenrohrs angeschlossen. Diese Düsen erstrecken sich radial und senkrecht zur vertikalen Achse der Rohre. Sie umfassen Heizelemente, um die Zuluft zu erwärmen. Die Heizelemente können Heizkörper sein, durch die ein flüssiges Medium fließen kann. Das Medium kann durch Solarkollektoren erwärmt werden. Die Erwärmung der Luft ist vorgesehen, um die vertikale Strömung nach oben zu beschleunigen. Die Lehre dieses Dokuments ist insofern interessant, als dass sie die Produktion von Strom mittels Sonnenenergie vorsieht. Sie erfordert allerdings hohe Ansaugrohre, die platzraubend sind. Sie offenbart auch nur sehr wenig Information über den Anbau der Turbine auf den Rohren. Der Wirkungsgrad dieser Anlage scheint ferner verbesserungsfähig zu sein, da die Anlage warme Luft am Ausgang der Rohre in die Umgebung abgibt.

Das Patent US 4,491,740 offenbart eine zum vorigen Dokument ähnliche Aufwindkraftanlage. Sie umfasst eine vertikale kreisförmige Wand in der ein zentrales aerodynamisches Teil eingebaut wird. Ein Windrad mit vertikaler Drehachse wird am oberen Ende der Wand eingebaut. Das aerodynamische Teil und die Wand bilden eine ringförmige Passage für die Luftströmung, die eine Beschleunigung der vertikalen Strömung verursacht. Diese Lehre stellt tatsächlich fest, dass die Leistung eines Windrads proportional zur dritten Potenz der Windgeschwindigkeit ist und versucht daher diese Geschwindigkeit zu erhöhen. Wie für die Lehre des vorigen Dokuments, gibt diese Anlage warme Luft in die Umgebung ab, so dass ihr Wirkungsgrad verbesserungsfähig zu sein scheint.

### Zusammenfassung der Erfindung

### Technische Aufgabe

Die der Erfindung zugrundeliegende Aufgabe kann darin bestehen, den Wirkungsgrad der Aufwindkraftanlage gemäß dem obengenannten Stand der Technik zu verbessern. Die der Erfindung zugrundeliegende Aufgabe kann auch darin bestehen, den Anbau des Windrads an der Aufwindkraftanlage gemäß dem obengenannten Stand der Technik zu verbessern.

### Technische Lösung

Die Erfindung besteht aus einem Aufwindkraftwerk umfassend: eine sich um eine vertikale Achse kreisförmig erstreckende Außenwand; einen sich innerhalb der Außenwand und sich um die vertikale Achse drehenden Flügelring; mehrere beheizbare, in die Außenwand mündende Ansaugrohre, zum Leiten von Zuluft in einen stromaufwärts des Flügelrings liegenden ringförmigen Raum; wobei das Aufwindkraftwerk zusätzlich stromabwärts des Flügelrings angeordnete Wärmetauscher umfasst, die zumindest einen Teil der Abwärme der Abluft zur Beheizung der Zuluft in den Ansaugrohren zurückgewinnt.

Der Flügelring kann ohne Mittelachse gebildet werden.

Gemäß einem bevorzugten Ausführungsbeispiel der Erfindung umfasst das Aufwindkraftwerk eine Innenwand, die vorzugsweise um die vertikale Achse kreisförmig ist, und wobei sich die Wärmetauscher zwischen der Innenwand und der Außenwand erstrecken.

Gemäß einem bevorzugten Ausführungsbeispiel der Erfindung verengt sich die Innenwand stromabwärts des Flügelrings, so dass der Querschnitt der Luftströmung in Strömungsrichtung zunimmt.

Gemäß einem bevorzugten Ausführungsbeispiel der Erfindung sind die Wärmetauscher blattförmig und erstrecken sich derart, dass sie mit der vertikalen Achse einen Winkel von weniger als 20°, vorzugsweise von weniger als 10°, bilden.

Gemäß einem bevorzugten Ausführungsbeispiel der Erfindung erstrecken sich die Wärmetauscher krumm und/oder parallel zueinander.

Gemäß einem bevorzugten Ausführungsbeispiel der Erfindung sind die Ansaugrohre derart konfiguriert, dass die Strömungsrichtung der Luft am Eintritt in den ringförmigen Raum schräg nach oben mit der horizontalen Richtung einen Winkel von mehr als 10°, vorzugsweise von mehr als 20° bildet.

Gemäß einem bevorzugten Ausführungsbeispiel der Erfindung sind die Ansaugrohre derart konfiguriert, dass die Strömungsrichtung der Luft am Eintritt in den ringförmigen Raum schräg in Drehrichtung des Flügelrings mit der radialen Richtung einen Winkel von mehr als 10°, vorzugsweise von mehr als 20°, bildet.

Gemäß einem bevorzugten Ausführungsbeispiel der Erfindung transportieren die Wärmetauscher die Wärme der Abluft über ein flüssiges Medium zur Beheizung der Zuluft in den Ansaugrohren. Das Medium kann durch Solarkollektoren, Geothermie, Abwärme oder eigens erzeugte Wärme, sei es mit konventionellen oder mit erneuerbaren Energien erwärmt werden.

Gemäß einem bevorzugten Ausführungsbeispiel der Erfindung ist der Durchschnittsdurchmesser der Zuluft-Ansaugrohre geringer als 10% des Durchschnittsdurchmessers des Flügelrings.

Gemäß einem bevorzugten Ausführungsbeispiel der Erfindung bildet der Flügelring den Rotor eines Stromgenerators, und der Flügelring umfasst Permanent- und/oder Elektromagnete.

Gemäß einem bevorzugten Ausführungsbeispiel der Erfindung ist der Flügelring durch sich entlang des Flügelrings erstreckende Lager gelagert, wobei die Lager vorzugsweise supraleitende Magnetlager sind.

Gemäß einem bevorzugten Ausführungsbeispiel der Erfindung weist der Flügelring Permanentmagnete auf, die sich kreisförmig entlang eines Außenumfangs sowie eines Innenumfangs des Flügelrings erstrecken.

Gemäß einem bevorzugten Ausführungsbeispiel der Erfindung weist das Aufwindkraftwerk ein Gestell sowie mehrere am Gestell befestigte Schwebespulen und/oder Generatorspulen auf, die sich entlang der Permanentmagnete des Flügelrings erstrecken.

Gemäß einem bevorzugten Ausführungsbeispiel der Erfindung stützen die sich entlang der Magnete am Außenumfang des Flügelrings ersteckenden Spulen sich an der Außenwand und/oder stützen die sich entlang der Magnete am Innenumfang des Flügelrings ersteckenden Spulen sich an der Innenwand.

Gemäß einem bevorzugten Ausführungsbeispiel der Erfindung weist der Flügelring eine Struktur aus Beton auf, wobei der Flügelring vorzugsweise derart gelagert ist, dass er axial nach oben lediglich durch sein Gewicht gehalten wird.

### Vorteile der Erfindung

Bei der Aufwindwirbelkraftanlage gemäß der Erfindung wird die Luft nach dem Durchgang durch den Flügelring, mittels Wärmetauscher stark abgekühlt, wobei so der größte Teil der zugeführten Energie zurückgewonnen werden kann und bevorzugt als Vorwärmer genutzt wird. Andere Nutzungsmöglichkeiten zum Beispiel Fernwärme oder Kraft-Wärme-Kopplung sind ebenso möglich.

Wärmekraftwerke existieren seit fast 200 Jahren, Windkraftanlagen noch viel länger. Auch mit Wärme angetriebene Windkraftanlagen sind seit fast 100 Jahren bekannt. Die Gesetze der Wärmelehre sind allgemein bekannt, ebenso wie die Gesetze der Windkraftnutzung. Es war offensichtlich selbst für Fachleute sehr schwer vorstellbar, beide Technologien miteinander zu verknüpfen und so mit der gleichen Wärmemenge und mit anschließender Wärmerückgewinnung, eine wesentlich höhere Leistung mit weniger eingesetzter Primärenergie zu erreichen.

### Kurze Beschreibung der Figuren

Figur 1 ist eine perspektivische Ansicht eines Aufwindkraftwerks gemäß der Erfindung.
Figur 2 ist eine Schnittzeichnung des unteren Teils der Außenwand sowie der Zuluftdüsen des Aufwindkraftwerks der Figur 1, wobei der Flügelring nicht dargestellt wird.
Figur 3 ist eine Schnittzeichnung der Außen- und Innenwände des Aufwindkraftwerks der Figur 1, wobei ein Wärmetauscher dargestellt wird.
Figur 4 ist eine Schnittzeichnung des unteren Teils des Aufwindkraftwerks der Figur 1, wobei der Flügelring dargestellt wird.

### Beschreibung eines Ausführungsbeispiels

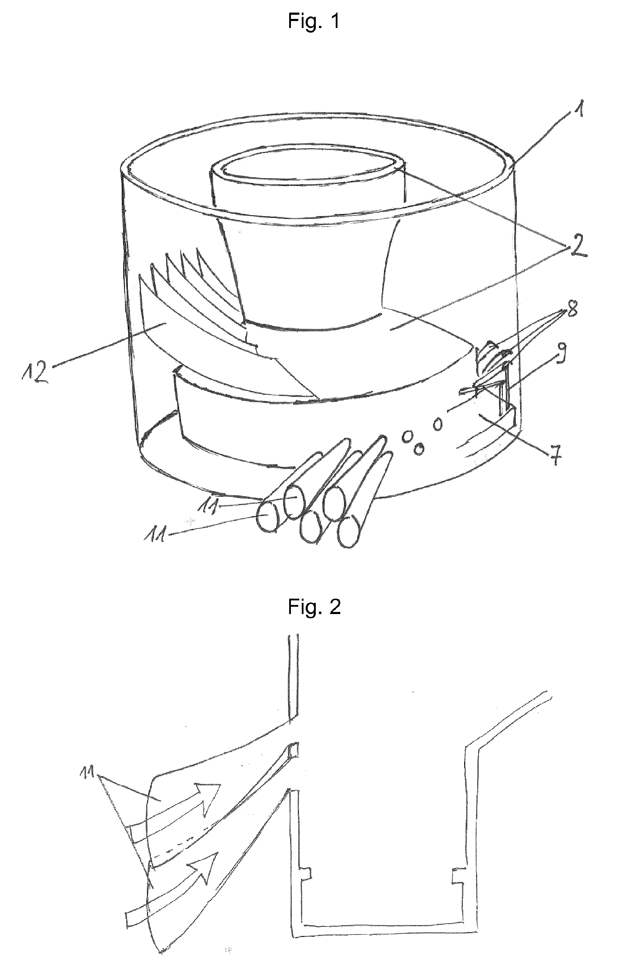

Fig. 1 zeigt den Grundaufbau eines Aufwindkraftwerkes gemäß der Erfindung. Das Aufwindkraftwerk umfasst eine äußere Wand 1, die überwiegend um eine vertikale Längsachse herum kreisförmig ausgebildet ist. Die Anlage umfasst auch eine innere Wand 2, die ebenfalls überwiegend kreisförmig um die vertikale Achse herum ausgebildet ist. Die äußere Wand 1 kann zylindrisch sein und die innere Wand 2 kann ein nicht-gerades Profil aufweisen. Die beiden Wände 1, 2 bilden eine ringförmige Passage für die Luft. Ein Rotor 7 mit Flügel 8 ist im unteren Bereich dieser Passage vorgesehen. Die Luft wird von den rundum angeordneten Ansaugwirbelrohren oder Düsen 11 dar- bzw. bereitgestellt, welche hier, der Übersichtlichkeit halber mit wenigen Rohren und deren Eingänge durch die äußere Wand dargestellt sind. Die Ansaugrohre 11 sind derart konzipiert, dass sie die Luft erwärmen können. Diese Ansaugrohre, wegen ihrer kombinierten Funktion als Absaugwirbelstromrohre bezeichnet, können in verschiedenen Ausführungsarten hergestellt und angeordnet werden. Die Anlage umfasst auch Wärmetauscher 12, die stromabwärts des Flügelrings 7, 8 eingebaut sind.

Die aufsteigende Luft steigt daher in einem ringförmigen (zylindrischen) Kanal auf, welcher durch zwei, bevorzugt aus Stahlbeton gefertigte zylinderförmige Wände von unterschiedlichem Durchmesser gebildet wird. Der Abstand zwischen diesen Zylindern ist überwiegend abhängig von der zu nutzenden Temperatur und proportional zur jeweiligen Luftgeschwindigkeit und zum jeweiligen Luftvolumen.

In Fig. 2 wird schematisch eine bevorzugte Ausführungsart in konischer Form von Ansaugwirbelstromrohren 11 mit Durchgang durch die äußere Wand dargestellt. Die Luft wird durch (nichtdargestellte) Wärmetauscher im Inneren der Ansaugwirbelstromrohre unten angesaugt (mit einem Pfeil dargestellt) und fließt mit sich laufend erhöhender Geschwindigkeit in den Innenraum der Anlage. Wegen der besseren Übersicht wurde ebenfalls auf die Darstellung der Luftfilter verzichtet.

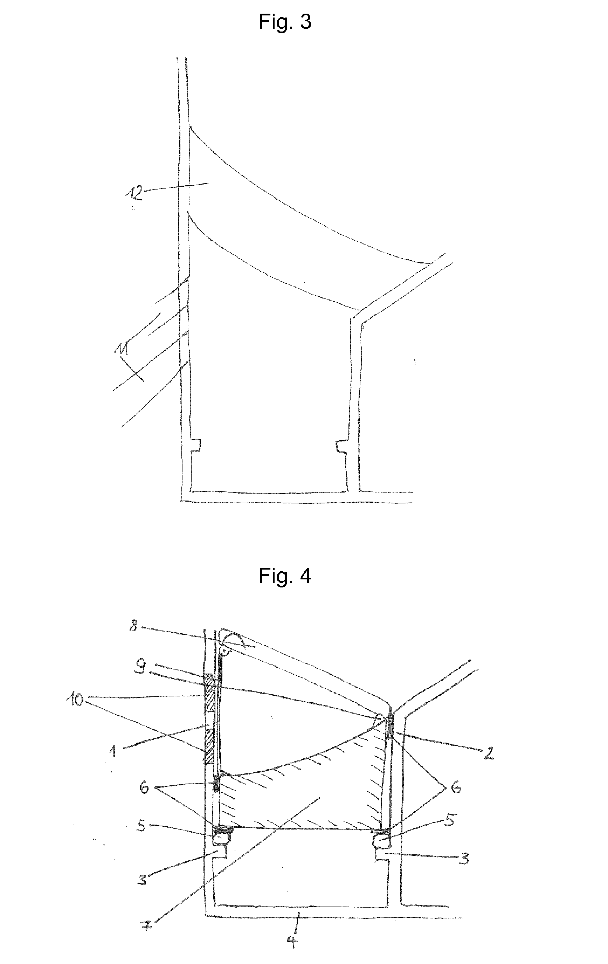

In Fig. 3 wird noch einmal die Position der Ansaugrohre gezeigt sowie die Wärmetauscher 12 oberhalb der Windturbine, welche der Luft etwa 90 % der vorher zugeführten Wärme entziehen und wiederum den Ansaugrohren zuführen. Wegen der besseren Übersicht wurde auch nur ein Teil der rundum verlaufenden Wärmetauscher eingezeichnet.

Abwärme wird durch die Wärmetauscher 12 zurückgewonnen und zur Unterstützung der Erwärmung der Zuluft in den Ansaugwirbelstromrohren 11 benutzt.

Die Ansaugrohre sind überwiegend vergleichbar mit Ansaugrohren des Erfinders Van Delic (siehe US 3436908 (1969)). Die Ansaugrohre haben üblicherweise eine konische Form mit sich verengendem Querschnitt. Im Inneren dieser Ansaugrohre sind meistens die Wärmetauscher eingebaut, welche einerseits die Luft erwärmen und andererseits durch geeignete Maßnahmen einen Drall der durchfließenden Luft erzeugen, wodurch die Geschwindigkeit wesentlich erhöht wird. Vorbild ist hier ein Tornadowirbel. Alle Rohre münden innerhalb der beiden Wände des Kraftwerks in einem Ring-Raum unterhalb der Windturbine und erzeugen auch hier einen massiven Wirbelstrom an Luft, bevor dieser seine aerodynamische bzw. kinetische Energie an die Windturbine abgibt. Im Inneren der Ansaugrohre und der Anlage wird die sich selbst elektrostatisch aufladende Luft durch geeignete Maßnahmen durch gleichpolig aufgeladene Wände und Turbinenschaufeln die aerodynamische Reibung so fast auf null Reibung reduziert.

Fig. 4 zeigt die einzelnen Teile des Innenraums des Ringraums in einer Schnittzeichnung. Bezeichnung 3 stellt den Aufleger für die elektrischen Spulen 5 des Generators dar. Die Erregung des Generators entsteht gleichzeitig durch die Magnete 6 des Supraleiters, wobei die Supraleiter selbst nicht eingezeichnet sind. Das Ring-Teil 7 dient einerseits der Aufnahme der Supraleiter mit ihrem Kühlaggregat (nicht eingezeichnet) und stellt andererseits die Verbindung 9 für die Flügel 8 des Windrads dar. Die gestrichelten Linien 10 in der äußeren Wand 1 sind dann die Öffnungen für die Ansaugwirbelstromrohre 11 welche bereits in Fig. 1 und in Fig. 2 gezeigt sind.

Weil bei dem vorliegenden Kraftwerk bevorzugt sehr hohe Windgeschwindigkeiten zur Anwendung gelangen, benötigt die Windturbine ein sehr schweres Gegengewicht um ein Abheben (Wegfliegen) zu vermeiden. Dieses Gegengewicht, bevorzugt hergestellt aus Stahlbeton in der Form eines Rings, kann durch seine große Masse, ohne Antrieb als Kurzzeitspeicher oder mit dauerndem Antrieb als Langzeitspeicher zum Glätten des Stromnetzes genutzt werden.

Der Flügelring mit seinem Gegengewicht ist durch seine Größe gleichzeitig ein bedeutender Kinetische-Energie-Speicher, der mit dieser Eigenschaft, Stromnetze stabilisieren kann.

Zwischen den beiden Wänden 1, 2 bewegt sich die ringförmige Windturbine, welche über eine größere Anzahl von kurzen Flügeln verfügt. Unten zwischen den Wänden kann sich in einer Ausführungsart die Lagerung befinden, welche mit Supraleiter gebildet wird für:
1) den Permanentmagnetgenerator, welcher seine Erregung von den gleichen Magneten bezieht, wie sie auch (zusätzlich) als Haltemagnete dem Supraleiter dienen.
2) das Gegengewicht, welches gleichzeitig als Schwungradspeicher dient und
3) die Windturbine, welche über eine größere Anzahl von Flügeln verfügt.

Das Kraftwerk kann im Zig kW-Bereich arbeiten sowie im mehrere hundert Megawatt-Bereich arbeiten, was dann auch der Größe des Generators entspricht.

Deshalb soll bevorzugt ein Supra-Trans-Schwebesystem zum Einsatz kommen, obwohl eine Rad-Schienen-Konstruktion genauso gut genutzt werden könnte.

Vorrichtungen vergleichbar mit Rasensprengern können in den Ansaugrohren vorgesehen werden. Sie befeuchten die aufsteigende Luft, welche durch die gleichzeitige Erwärmung sehr viel Feuchtigkeit bindet. Der Zweck dieser Maßnahme ist eine noch höhere Windgeschwindigkeit bei gleicher Energiezufuhr.

In einer anderen Ausführungsart können zwecks Vergrößerung der Kühlfläche die Wärmetauscherrohre im Ansaugrohr mit einem mehrstufigen langgezogenen Drall und zusätzlichen äußeren Kühlflächen versehen werden, deshalb werden diese Ansaugrohre hier auch als Saugstromwirbelrohre bezeichnet. Zusätzlich besteht die Möglichkeit, dass eine aufsteigende Abdampfleitung ihren Dampf in verschiedenen Höhen den Ansaugwirbelstromrohren zuführen kann. Damit kann einem unterschiedlichen Leistungs- und Kühlbedarf Rechnung getragen werden.

Diese können die aufgeheizte Luft so im Wirbeltopf zu einer gleichmäßigen, konstanten Wirbelströmung bündeln.

Neben der Stromerzeugung durch den Generator können thermodynamische Batterien und Generatoren zusätzlich weiteren Strom aus der angelieferten Wärme liefern.

Der verbleibende Raum im Zylinder im Zentrum des Kraftwerks könnte zusätzlich landwirtschaftlich oder zur Fischzucht verwendet werden, wo höhere Temperaturen Heizkosten einsparen. Kondenswasser-Sammler können außerhalb des Kraftwerks angeordnet werden. Die Anzahl der Saugwirbelstromrohre kann je nach Anforderung und Bedarf in einer oder in mehreren Reihen um den Wirbeltopf angeordnet werden.

Das Prinzip des Kraftwerks zielt darauf ab, den Carnot-Wirkungsgrad mit Hilfe der Aerodynamik zu umgehen. Im Gegensatz zur Thermodynamik ist die Windkraft ein offenes System. Würde die Windkraft sich gleich verhalten wie die Thermodynamik, würde es hinter jeder Windkraftanlage kälter werden, was bekanntermaßen nicht der Fall ist. Im Gegensatz zu allen bis jetzt bekannten Aufwindkraftwerken, ist es möglich, theoretisch bei jedem Auftriebskraftwerk, den größten Teil der Abwärme wieder zu nutzen, weil durch die Windkraftanlage zwar die Windgeschwindigkeit auf ein Drittel abgebremst wird, die Temperatur aber kaum eine Reduzierung erleidet. Unser Wirbelstromkraftwerk zielt auf möglichst hohe Temperaturen ab, wobei dann anschließend hinter der Windturbine wieder 90 % der ursprünglichen Wärme mittels Wärmetauscher abgeführt und den Ansaugrohren wieder als Vorwärmung zugeführt wird. Die starke Luftabkühlung hat eine Kompression der Luftmoleküle zur Folge. Dadurch wird gleichzeitig die Funktion als Schalldämpfer (Wellenlänge des Schalldruckpegels) erhöht. Weil die Luftgeschwindigkeit proportional zur Temperatur ansteigt, dagegen die abgegebene Leistung mit der dritten Potenz zur Windgeschwindigkeit, macht sich eine höhere Temperatur mit einer wesentlich höheren Effizienz pro zugeführter Energiemenge bemerkbar.

## Patentansprüche

1. Aufwindkraftwerk umfassend:
- eine sich um eine vertikale Achse ersteckende kreisförmige Außenwand (1);
- einen sich innerhalb der Außenwand (1) ersteckenden und sich um die vertikale Achse drehenden Flügelring (7, 8);
- mehrere beheizbare, in die Außenwand (1) mündende Ansaugrohre (11), zum Leiten von Zuluft in einen stromaufwärts des Flügelrings (7, 8) liegenden, ringförmigen Raum;
**dadurch gekennzeichnet, dass** das Aufwindkraftwerk zusätzlich Folgendes umfasst:
- stromabwärts des Flügelrings (7, 8) angeordnete Wärmetauscher (12), die zumindest einen Teil der Abwärme der Abluft zur Beheizung der Zuluft in den Ansaugrohren (11) zurückgewinnen.

2. Aufwindkraftwerk gemäß dem Anspruch 1, **dadurch gekennzeichnet, dass** das Aufwindkraftwerk eine Innenwand (2) umfasst, die vorzugsweise kreisförmig um die vertikale Achse herum angeordnet ist, und dass sich die Wärmetauscher (12) zwischen der Innenwand und der Außenwand erstrecken.

3. Aufwindkraftwerk gemäß dem Anspruch 2, **dadurch gekennzeichnet, dass** sich die Innenwand (2) stromabwärts des Flügelrings verengt, so dass der Querschnitt der Luftströmung in Strömungsrichtung zunimmt.

4. Aufwindkraftwerk gemäß einem der Ansprüche 1 bis 3, **dadurch gekennzeichnet, dass** die Wärmetauscher (12) blattförmig sind und sich derart erstrecken, dass sie einen Winkel von weniger als 20°, vorzugsweise von weniger als 10°, mit der vertikalen Achse bilden.

5. Aufwindkraftwerk gemäß einem der Ansprüche 1 bis 4, **dadurch gekennzeichnet, dass** die Wärmetauscher (12) sich krumm und parallel zueinander erstecken.

6. Aufwindkraftwerk gemäß einem der Ansprüche 1 bis 5, **dadurch gekennzeichnet, dass** die Ansaugrohre (11) derart konfiguriert sind, dass die Strömungsrichtung der Luft am Eintritt in den ringförmigen Raum schräg nach oben mit einem Winkel von mehr als 10°, vorzugsweise von mehr als 20°, zur horizontalen Richtung liegt.

7. Aufwindkraftwerk gemäß einem der Ansprüche 1 bis 6, **dadurch gekennzeichnet, dass** die Ansaugrohre (11) derart konfiguriert sind, dass die Strömungsrichtung der Luft am Eintritt in den ringförmigen Raum schräg in die Drehrichtung der Flügelrings mit einem Winkel von mehr als 10°, vorzugsweise von mehr als 20°, zur radialen Richtung liegt.

8. Aufwindkraftwerk gemäß einem der Ansprüche 1 bis 7, **dadurch gekennzeichnet, dass** die Wärmetauscher (12) die Wärme der Abluft über ein flüssiges Medium zur Beheizung der Zuluft in den Ansaugrohren (11) transportieren.

9. Aufwindkraftwerk gemäß einem der Ansprüche 1 bis 8, **dadurch gekennzeichnet, dass** der Durchschnittsdurchmesser der Ansaugrohre (11) geringer als 10% des Durchschnittsdurchmessers des Flügelrings (7, 8) ist.

10. Aufwindkraftwerk gemäß einem der Ansprüche 1 bis 9, **dadurch gekennzeichnet, dass** der Flügelring (7, 8) den Rotor (7) eines Stromgenerators bildet und der Flügelring Permanent- und/oder Elektromagnete (6) umfasst.

11. Aufwindkraftwerk gemäß einem der Ansprüche 1 bis 10, **dadurch gekennzeichnet, dass** der Flügelring (7, 8) durch sich entlang des Flügelrings erstreckende Lager (5, 6) gelagert ist, wobei die Lager vorzugsweise supraleitende Magnetlager sind.

12. Aufwindkraftwerk gemäß einem der Ansprüche 1 bis 11, **dadurch gekennzeichnet, dass** der Flügelring (7, 8) Permanentmagnete (6) aufweist, die sich kreisförmig entlang eines Außenumfangs sowie eines Innenumfangs des Flügelrings erstrecken.

13. Aufwindkraftwerk gemäß dem Anspruch 12, **dadurch gekennzeichnet, dass** das Aufwindkraftwerk ein Gestell (3, 4) sowie mehrere am Gestell befestigte Schwebespulen und/oder Generatorspulen aufweist, die sich entlang der Permanentmagnete des Flügelrings erstrecken.

14. Aufwindkraftwerk gemäß dem Anspruch 13 und einem der Ansprüche 2 und 3, **dadurch gekennzeichnet, dass** die sich entlang der Magnete (6) am Außenumfang des Flügelrings (7, 8) ersteckenden Spulen (5) sich an der Außenwand (1) stützen und/oder die sich entlang der Magnete (6) am Innenumfang des Flügelrings (7, 8) ersteckenden Spulen (5) sich an der Innenwand (2) stützen.

15. Aufwindkraftwerk gemäß einem der Ansprüche 1 bis 14, **dadurch gekennzeichnet, dass** der Flügelring (7, 8) eine Struktur (7) aus Beton aufweist und, dass vorzugsweise der Flügelring derart gelagert ist, dass er axial nach oben lediglich durch sein Gewicht gehalten wird.
